# EUROPÄISCHE PATENTSCHRIFT

(11) **EP 1 652 738 B1**
(45) Veröffentlichungstag und Bekanntmachung des Hinweises auf die Patenterteilung: **16.03.2016**
(21) Anmeldenummer: 06001529.4
(22) Anmeldetag: 16.07.2004
(51) Int. Cl.: B62D 1/10, B60R 21/203

(54) **Fahrzeuglenkvorrichtung mit feststehendem Mittelteil**
Steering apparatus with stationary center part
Dispositif de direction avec la partie centrale stationnaire

(30) Priorität: 22.07.2003 DE 20311255 U; 12.05.2004 DE 202004007617 U
(43) Veröffentlichungstag der Anmeldung: 03.05.2006
(62) Teilanmeldung aus: 04016867.6
(73) Patentinhaber: TRW Automotive Safety Systems GmbH, 63743 Aschaffenburg (DE)
(72) Erfinder: Kreuzer, Martin, 63839 Kleinwallstadt (DE); Frisch, Ralph, 63776 Mömbris (DE); Neumann, René, 61273 Wehrheim (DE); Fäth, Stefan, 63743 Aschaffenburg (DE); Lefringhausen, Heinz-Jörg, 63533 Mainhausen (DE)
(74) Vertreter: Mehnert, Bernhard

(56) Entgegenhaltungen:
- EP-A- 0 243 047
- WO-A1-2005/085016
- DE-A- 2 131 902
- DE-A- 3 406 327
- DE-A- 4 446 901

## Beschreibung

Die Erfindung betrifft eine Fahrzeuglenkvorrichtung sowie ein Verfahren zur Herstellung einer Fahrzeuglenkvorrichtung.

Solche Lenkvorrichtungen, die beispielsweise aus der Deutschen Offenlegungsschrift Nr. 2 131 902 oder der EP 0 414 245 A1 bekannt sind, haben grundsätzlich den Vorteil, dass auf dem Mittelteil angebrachte Bedienelemente unabhängig von der Lenkradstellung immer an der gleichen Stelle zu finden sind. Bei Lenkvorrichtungen mit einem im feststehenden Mittelteil untergebrachten Gassackmodul muss der Gassack nicht mehr notwendigerweise symmetrisch zum Drehzentrum der Lenkvorrichtung gestaltet sein. Da die Orientierung des sich aus dem feststehenden Mittelteil entfaltenden Gassacks von vorneherein feststeht, können asymmetrische Gassackformen mit besseren Rückhalteeigenschaften eingesetzt werden. Die Verkabelung eines relativ zum drehbaren Lenkradteil feststehenden Gassackmoduls ist jedoch problematisch im Vergleich zu herkömmlichen Lenkrädern ohne feststehenden Mittelteil, bei denen üblicherweise eine sogenannte Wickelfeder die ordnungsgemässe elektrische Verbindung zwischen dem starren Kabelbaum am Lenkstock und den mit dem Lenkrad drehbaren elektrischen Komponenten sicherstellt. Bei einer Lenkvorrichtung mit feststehendem Gassackmodul müssen dagegen insbesondere die Zuleitungen zum Gasgenerator durch den drehbaren Lenkradteil geführt werden.

Daneben ist eine Fahrzeuglenkvorrichtung aus der DE 34 06 327 A1 bekannt.

Aufgabe der Erfindung ist es, eine Lenkvorrichtung mit feststehendem Mittelteil sowie ein Verfahren zur deren Herstellung zu schaffen, das die Vorteile eines ortsfesten Gassacks bietet, bei dem aber eine einfache und sichere Verkabelung des Gassackmoduls ermöglicht ist.

Gemäss der Erfindung wird die Aufgabe durch eine Lenkvorrichtung nach Anspruch 2 sowie durch ein Verfahren nach Anspruch 1 gelöst. Hierbei ist die Zuleitung von einer in einem nicht-drehbaren Abschnitt der Lenkvorrichtung angeordneten ersten Wickelfeder in eine im drehbaren Lenkradteil angeordnete zweite Wickelfeder und von dort in die Gasgeneratoreinheit geführt. Bei dieser Lösung wird die bei Lenkrädern ohne drehbaren Mittelteil üblicherweise für eine Verkabelung eingesetzte, Wickelfeder durch eine zusätzliche Wickelfeder ergänzt, wodurch eine sichere elektrische Kontaktierung der Gasgeneratoreinheit über den drehenden Bereich der Lenkvorrichtung realisiert wird. Da sich das Prinzip der Wickelfeder über lange Zeit bewährt hat, ist eine hohe Funktionssicherheit gewährleistet.

Vorteilhafte und zweckmässige Ausgestaltungen der erfindungsgemässen Lenkvorrichtung sind in den Unteransprüchen angegeben.

Weitere Merkmale und Vorteile der Erfindung ergeben sich aus der nachfolgenden Beschreibung eines Ausführungsbeispiels und aus den beigefügten Zeichnungen, auf die Bezug genommen wird. In den Zeichnungen zeigen:
Figur 1 eine Draufsicht einer nicht erfindungsgemässen Lenkvorrichtung;
Figur 2 eine Schnittansicht entlang der Linie A-A aus Fig. 1;
Figur 3 eine Schnittansicht entlang der Linie B-B aus Fig. 1; und
Figur 4 eine Schnittansicht einer erfindungsgemässen Lenkvorrichtung.

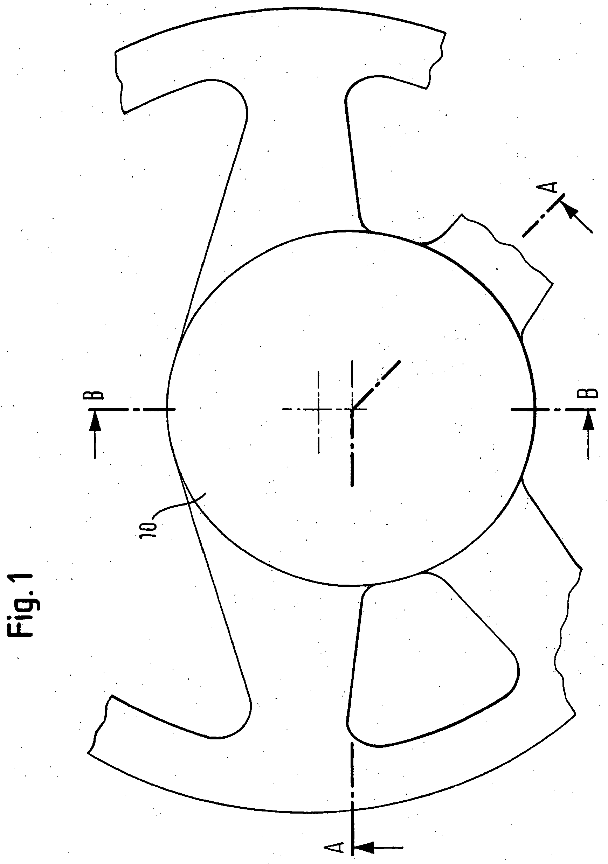

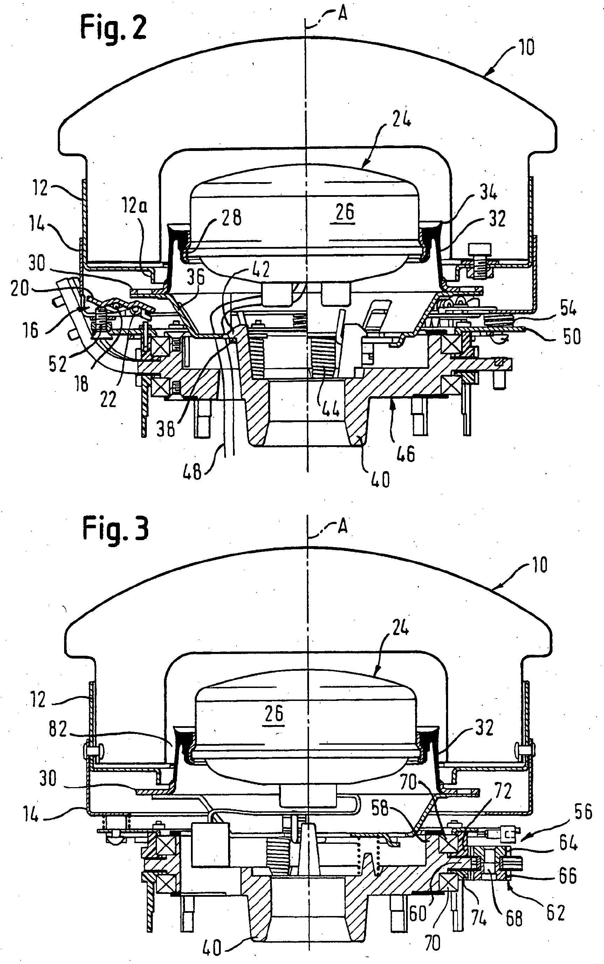

In den Figuren 1 bis 3 ist eine nicht erfindungsgemässe Lenkvorrichtung mit montiertem Gassackmodul 10 dargestellt. Das Gassackmodul 10 umfasst einen Zusammenbau mit einer Abdeckung und einem Gassackkäfig (in den Figuren 2 und 3 nicht getrennt dargestellt) sowie einem Trägerblech 12 zur Befestigung eines Gassacks (nicht gezeigt) mit einem abgewinkelten Fortsatz 12a und einem Außenträgerblech 14. An das Außenträgerblech 14 sind mehrere Verriegelungseinrichtungen 16 mit einem um eine Achse 18 verschwenkbaren Verriegelungsteil 20 gekoppelt, dessen Funktion später erläutert wird. Das Verriegelungsteil 20 ist durch eine Feder 22 gemäß der Darstellung der Figur 2 bezüglich der Achse 18 gegen den Uhrzeigersinn vorgespannt.

Ferner ist eine Gasgeneratoreinheit 24 mit einem Gasgenerator 26, einem Montageblech 28 und einem ringförmigen Montageflansch 30 sowie einem elastischen Montagezylinder 32 mit außenseitigen Fortsätzen 34 vorgesehen. Die freien Ränder des elastischen Montagezylinders 32 sind einerseits mit dem Montageblech 28 und andererseits mit dem Montageflansch 30 verbunden, so daß der Gasgenerator 26 die Funktion eines Schwingungstilgers übernimmt. Zur Gasgeneratoreinheit 24 gehört auch ein am Montageflansch 30 befestigtes Verbindungsblech 36, an dessen Unterseite radial verschiebbare Federelemente 38 vorgesehen sind.

Die Lenkvorrichtung umfaßt schließlich eine drehfest mit einer Lenksäule des Fahrzeugs (nicht gezeigt) verbundene Nabe 40 mit angeformten Druckgußhaken 42 und im Inneren der Nabe 40 axial angeordnete Federn 44. Einstückig mit der Nabe 40 ist ein Lenkradskelett 46 ausgebildet. Eine in den Gasgenerator 26 geführte (in Figur 2 nur schematisch angedeutete) Zuleitung 48, über die der Gasgenerator 26 mit einer außerhalb der Lenkvorrichtung angeordneten Steuereinheit verbunden ist, ist neben der Nabe 40 aus der Lenkvorrichtung heraus- und einer Wickelfeder (nicht gezeigt) zugeführt. Eine Platte 50, in deren Außenbereich Bolzen 52 vorgesehen sind, ist gegenüber der Nabe 40 drehbar gelagert. Zwischen der Platte 50 und dem Außenträgerblech 14 sind Federn 54 vorgesehen.

Die Gesamtheit der drehfest mit der Lenksäule gekoppelten Bauteile wird im folgenden als Lenkradteil bezeichnet.

In Figur 3 ist eine Getriebeeinheit 56 zu sehen, deren Funktion ebenfalls später erläutert wird. In einem mit der Nabe 40 verbundenen, sich radial von einem axialen Abschnitt 58 weg erstreckenden Skelettabschnitt 60 ist ein Doppelritzelteil 62 gelagert, das zwei parallel angeordnete Ritzel 64, 66 aufweist, die über einen Achsenabschnitt 68 drehfest miteinander verbunden sind. An der Außenseite des axialen Skelettabschnitts 58 sind zwei Wälzlager 70 angebracht, von denen eines oberhalb und eines unterhalb des horizontalen Skelettabschnitts 60 angeordnet ist. Die Wälzlager 70 tragen zwei komplett um die Mittelachse A der Lenkvorrichtung umlaufende Zahnkränze 72, 74, die mit dem oberen Ritzel 64 bzw. mit dem unteren Ritzel 66 in Eingriff stehen. Der untere Zahnkranz 74 ist lenkstockfest gelagert, wogegen der obere Zahnkranz 72 an das Gassackmodul 10 gekoppelt ist.

Vor dem Einbau des Gassackmoduls 10 ist die Gasgeneratoreinheit 24 Bestandteil des Gassackmoduls 10. Beim Einsetzen des Gassackmoduls 10 wird die Gasgeneratoreinheit 24 automatisch vom Gassackmodul 10 an den Lenkradteil übergeben.

Damit das Gassackmodul 10 ortsfest gegenüber der jetzt mit dem Lenkradteil drehbaren Gasgeneratoreinheit 26 bleiben kann, ist zwischen dem elastischen Montagezylinder 32 und dem Gassackkäfig ein Spalt 82 vorgesehen. Der elastische Montagezylinder 32 mit seinen außenseitigen Fortsätzen 34 verhindert, daß durch diesen Spalt 82 bei einer Aktivierung des Gasgenerators 24 die ausströmenden Gase unkontrolliert nach unten abströmen, da die Fortsätze 34 durch die ausströmenden Gase fest an den Gassackkäfig gedrückt werden und so für eine ausreichende Abdichtung sorgen.

Die Relativbewegung des Lenkradteils gegenüber dem feststehenden Gassackmodul 10 wird durch die Getriebeeinheit 56 ermöglicht. Das an dem radialen Skelettabschnitt 60 gelagerte Doppelritzelteil 62 wird bei einer Drehbewegung des Lenkradteils mitgenommen. Da der untere Zahnkranz 74 lenkstockfest gelagert ist, läuft das untere Ritzel 66 dabei auf dem unteren Zahnkranz 74 ab. Die Drehung des unteren Ritzels 66 wird auf das über den Achsenabschnitt 68 drehfest verbundene obere Ritzel 64 übertragen. Dadurch wird der obere Zahnkranz 72 mit dem daran gekoppelten Gassackmodul 10 entgegengesetzt zur Drehrichtung des Lenkradteils gedreht, so dass sich das Gassackmodul 10 effektiv nicht mit dem Lenkradteil mitdreht, also ortsfest bleibt. Das Gassackmodul 10 ohne die Gasgeneratoreinheit 24 bildet im eingebauten Zustand somit einen gegenüber dem Lenkradteil feststehenden Mittelteil der Lenkvorrichtung.

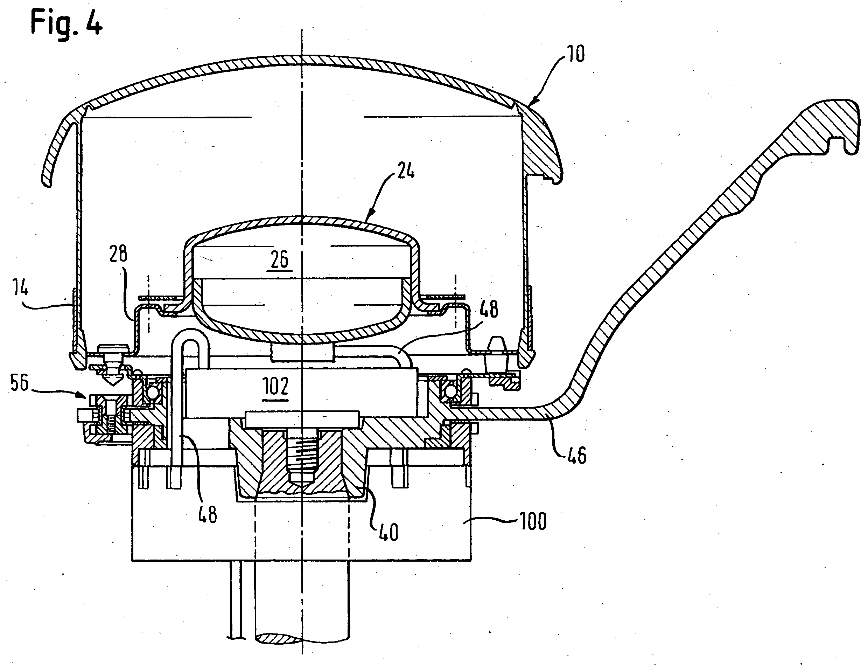

In Figur 4 ist eine Fahrzeuglenkvorrichtung gemäss der Erfindung dargestellt, wobei die gleichen Bezugszeichen wie in den Figuren 1 bis 3 verwendet wurden, soweit sie einander entsprechende Bauteile bezeichnen.

Die Lenkvorrichtung entspricht weitgehend der zuvor beschriebenen Lenkvorrichtung mit dem Unterschied, dass die Gasgeneratoreinheit 24 hier fester Bestandteil des Gassackmöduls 10 ist, also nicht bei der Montage des Gassackmoduls 10 an den drehbaren Lenkradteil übergeben wird. Dementsprechend dreht sich der Gasgenerator 26 bei einer Drehung des Lenkradteils nicht mit diesem mit. Das Problem der Verkabelung des Gasgenerators 26 ist hier durch eine Nebenwickelfeder 102 (zweite Wickelfeder) gelöst, die zusätzlich zu einer Hauptwickelfeder 100 (erste Wickelfeder) vorgesehen ist.

Das Prinzip der Verkabelung von Komponenten, die in oder an einem Lenkrad ohne feststehenden Mittelteil angeordnet sind, mit Hilfe einer Wickelfeder ist hinlänglich bekannt und wird daher an dieser Stelle nicht näher erläutert. Da bei der in Figur 4 dargestellten Lenkvorrichtung die Gasgeneratoreinheit 24 aber zum feststehenden Mittelteil des Lenkrads gehört, ist eine derartige Verkabelung mit nur einer Wickelfeder hier nicht zweckmässig.

Die Zuleitung 48 für den Gasgenerator 26, über die der Gasgenerator 26 mit einer ausserhalb der Lenkvorrichtung angeordneten Steuereinheit elektrisch verbunden ist, ist daher von der in einem nicht-drehbaren Abschnitt der Lenkvorrichtung angeordneten Hauptwickelfeder 100 in die im drehbaren Lenkradteil angeordnete Nebenwickelfeder 102 und von dort in den Gasgenerator 26 geführt. Selbstverständlich können auch weitere Zuleitungen für andere Lenkradfunktionseinheiten, wie etwa eine Hupe oder Multifunktionsschalter, auf die gleiche Weise verlegt sein.

## Patentansprüche

1. Verfahren zur Herstellung einer Fahrzeuglenkvorrichtung mit einem drehfest an eine Lenksäule gekoppelten Lenkradteil und einem gegenüber einer Drehung des Lenkradteils feststehenden Mittelteil, in dem ein Gassackmodul (10) mit einer Gasgeneratoreinheit (24) untergebracht ist, wobei die Gasgeneratoreinheit (24) über eine Zuleitung (48) mit einer außerhalb der Lenkvorrichtung angeordneten Steuereinheit elektrisch verbunden ist, mit folgenden Schritten:
• Anordnen einer ersten Wickelfeder (100) in einem nicht-drehbaren Abschnitt der Lenkvorrichtung,
• Anordnen einer zweiten Wickelfeder (102) im drehbaren Lenkradteil,
• Führen der Zuleitung (48) von der ersten Wickelfeder (100) in die zweite Wickelfeder (102) und von der zweiten Wickelfeder (102) in die Gasgeneratoreinheit (24).

2. Fahrzeuglenkvorrichtung mit einem drehfest an eine Lenksäule gekoppelten Lenkradteil und einem gegenüber einer Drehung des Lenkradteils feststehenden Mittelteil, in dem ein Gassackmodul (10) mit einer Gasgeneratoreinheit (24) untergebracht ist, wobei die Gasgeneratoreinheit (24) über eine Zuleitung (48) mit einer ausserhalb der Lenkvorrichtung angeordneten Steuereinheit elektrisch verbunden ist, wobei die Zuleitung (48) von einer in einem nicht-drehbaren Abschnitt der Lenkvorrichtung angeordneten ersten Wickelfeder (100) in eine im drehbaren Lenkradteil angeordnete zweite Wickelfeder (102) und von dort in die Gasgeneratoreinheit (24) geführt ist.

3. Lenkvorrichtung nach Anspruch 2, **dadurch gekennzeichnet, dass** neben der Zuleitung (48) für die Gasgeneratoreinheit (24) noch weitere Zuleitungen für andere Lenkradfunktionseinheiten vorgesehen sind, die ebenfalls über die beiden Wickelfedern (102, 100) geführt sind.

4. Lenkvorrichtung nach Anspruch 2 oder 3, **dadurch gekennzeichnet, dass** zwischen dem Lenkradteil und dem Mittelteil eine Getriebeeinheit (56) vorgesehen ist, die eine Drehung des Lenkradteils in eine erste Richtung in eine entsprechende Drehung des Mittelteils in eine der ersten Richtung entgegengesetzte zweite Richtung überträgt.

5. Lenkvorrichtung nach Anspruch 4, **dadurch gekennzeichnet, dass** die Getriebeeinheit (56) zwei drehfest miteinander gekoppelte Ritzel (64, 66) umfasst, die in Eingriff mit einem ersten, an das Gassackmodul (10) gekoppelten Zahnkranz (72) bzw. mit einem zweiten, lenkstockfest gelagerten Zahnkranz (74) stehen.

## Claims

1. A method of manufacturing a vehicle steering apparatus comprising a steering wheel part coupled to a steering column in a rotationally fixed manner and a center part stationary vis-à-vis rotation of the steering wheel part in which an airbag module (10) including an inflator unit (24) is accommodated, wherein the inflator unit (24) is electrically connected via a feed line (48) to a control unit arranged outside the steering apparatus, comprising the steps of:
• arranging a first clock spring (100) in a non-rotatable portion of the steering apparatus,
• arranging a second clock spring (102) in the rotatable steering wheel part,
• guiding the feed line (48) from the first clock spring (100) into the second clock spring (102) and from the second clock spring (102) into the inflator unit (24).

2. A vehicle steering apparatus comprising a steering wheel part coupled to a steering column in a rotationally fixed manner and a center part stationary vis-à-vis rotation of the steering wheel part in which an airbag module (10) including an inflator unit (24) is accommodated, wherein the inflator unit (24) is electrically connected to a control unit arranged outside the steering apparatus via a feed line (48), wherein the feed line (48) is guided from a first clock spring (100) arranged in a non-rotatable portion of the steering apparatus into a second clock spring (102) arranged in the rotatable steering wheel part and from there into the inflator unit (24).

3. The steering apparatus according to claim 2, **characterized in that**, apart from the feed line (48) for the inflator unit (24), additional feed lines for other steering wheel functional units are provided which are equally guided via the two clock springs (102, 100).

4. The steering apparatus according to claim 2 or 3, **characterized in that** between the steering wheel part and the center part a gear unit (56) is provided for transmitting rotation of the steering wheel part in a first direction to a corresponding rotation of the center part in a second direction opposed to the first direction.

5. The steering apparatus according to claim 4, **characterized in that** the gear unit (56) comprises two bevel pinions (64, 66) coupled in a rotationally fixed manner which are engaged in a first ring gear (72) coupled to the airbag module (10) and, resp., in a second ring gear (74) fixedly supported on the steering column assembly.

## Revendications

1. Procédé de fabrication d'un dispositif de direction de véhicule avec la partie volant couplée en rotation à la colonne de direction et une partie centrale fixe par rapport à une rotation de la partie volant de direction, dans laquelle sont logés un module airbag (10) avec un générateur de gaz (24), pour lequel le générateur de gaz (24) est relié électriquement au travers d'un câble d'alimentation (48) avec une unité de commande disposée à l'extérieur du volant de direction, comprenant les étapes consistant à:
• placer un premier ressort hélicoïdal (100) dans une partie non rotative du volant de direction,
• placer un second ressort hélicoïdal (102) dans la partie rotative du volant de direction,
• guider le câble d'alimentation (48) du premier ressort hélicoïdal (100) dans le deuxième ressort hélicoïdal (102) et du second ressort hélicoïdal (102) au générateur de gaz (24).

2. Dispositif de direction de véhicule avec la partie volant couplée en rotation à la colonne de direction et une partie centrale fixe par rapport à une rotation de la partie volant de direction, dans laquelle sont logés un module airbag (10) avec un générateur de gaz (24), pour lequel le générateur de gaz (24) est relié électriquement au travers d'un câble d'alimentation (48) avec une unité de commande disposée à l'extérieur du volant de direction, dans lequel le câble d'alimentation (48) est guidé depuis un ressort hélicoïdal (100) disposé dans une partie non rotative du volant de direction dans un second ressort hélicoïdal (102) disposé dans une partie rotative du volant de direction et de là est guidé au générateur de gaz ( 24).

3. Dispositif de direction selon la revendication 2, **caractérisé en ce que**, en supplément du câble d'alimentation (48) pour le générateur de gaz (24) sont prévus plusieurs câbles d'alimentation pour d'autres fonctions du volant, qui sont aussi guidés au travers des deux ressorts hélicoïdaux (102, 100).

4. Dispositif de direction selon la revendication 2 ou 3, **caractérisé en ce qu'**une unité de transmission (56) est prévue entre le volant de direction et la partie centrale, qui transfert la rotation du volant de direction dans une première direction en une rotation correspondante de la partie centrale dans une deuxième direction opposée à la dite première direction.

5. Dispositif de direction selon la revendication 4, **caractérisé en ce que** l'unité de transmission (56) comprend deux pignons (64, 66) couplés solidairement en rotation, qui sont en prise avec une première roue dentée (72) couplée au module airbag (10), ou le cas échéant avec une deuxième roue dentée (74) montée fixe sur la colonne de direction.
